Europäisches Patentamt

European Patent Office

Office européen des brevets

(11) Publication number: **0 260 815**
**A1**

## (12) EUROPEAN PATENT APPLICATION

(21) Application number: **87307275.5**

(22) Date of filing: **18.08.87**

(51) Int. Cl.⁴: **G09C 5/00**

The title of the invention has been amended (Guidelines for Examination in the EPO, A-III, 7.3).

(30) Priority: **18.08.86 AU 7514/86**

(43) Date of publication of application:
**23.03.88 Bulletin 88/12**

(84) Designated Contracting States:
**AT CH DE ES FR GB IT LI NL SE**

(71) Applicant: **SPECTRON PRINT PTY. LIMITED**
**63 Fairbank Road**
**Clayton Victoria 3168(AU)**

(72) Inventor: **O'Brien,Kevin Arthur**
**C/O Spectron Print Pty.Ltd. 63 Fairbank Road**
**Clayton, Victoria 3168(AU)**
Inventor: **Rowley,Kenneth David**
**C/O Spectron Print Pty.Ltd. 63 Fairbank Road**
**Clayton, Victoria 3168(AU)**
Inventor: **Paykin,Alex**
**Alfatron Pty.Ltd. 1761 Ferntree Gully Road**
**Ferntree Gully, Victoria 3156(AU)**

(74) Representative: **Warren, Anthony Robert et al**
**BARON & WARREN 18 South End Kensington**
**London W8 5BU(GB)**

(54) **Secure encoding method and associated products.**

(57) Means for producing visual information, characterised by a base surface 5 having an area coloured in two distinct colours, the first of said colours being the background colour and the second of said colours being applied in a random pattern of macropixels 6 of definite uniform shape, and a mask 8 which is transparent over at least an area identical to the first mentioned area and is arranged so the tranparent portion has pixels 11 which are identical in size with said first-mentioned pixels in a pattern 9 generally identical with the pattern on the base surface except in that portion where the information is desired to appear, in which portion the pixels 11 are displaced with respect to those on the base surface, so that in that portion the pixels produce the desired visual information when the pattern on the mask is placed directly over the pattern on the base surface and on the remainder of the area the random pattern is maintained.

Fig. 1.

Fig. 2.

# SECURE ENCODING METHOD AND PRODUCTS

This invention relates to a secure encoding method and products which are encoded using the method.

There are many areas where it is necessary to be able to ensure that an article or product is genuine. One area of concern can be in the area of instant lotteries or games where tickets are sold to players who are then invited to expose a number of square and, should the squares show a particular combination of indicia, then a prize is won.

In some of such lotteries or games the prizes can be of very substantial value and the printers of such tickets must take great pains to ensure that the tickets are not counterfeited.

There are also many other areas where it is desirable to ensure that articles are in fact genuine and some applications can be, for example, share certificates and bonds, record labels, pharmaceuticals and other labelled products.

There have been proposed many different methods of ensuring that products are genuine and haven't been tampered with and these include the use of multiple or non-standard colours, special forms of printing, special forms of paper, fugitive inks, inks which flouresce under ultra violet light and latent images which cannot be normally be seen but which can be seen under certain conditions, such as on exposure to ultra violet light.

Some years ago Graphic Security Systems Corp, of New York produced a new method of security which had indicia in a standard or coded form and which could be unscrambled by the use of lenticular screens.

The images in this system were rather complex in that they were formed by an auto stereoscopic camera which photographs an image through a graticule which corresponds in form with the lenticular screen used to decode the image.

Particulars of this process are described in Australian Patents Nos. 507253, 518356 and 525138 of A. V. Alasia.

In this form of system the encoded material makes no sense whatsoever when viewed with the naked eye but when the lenticular screen is located thereover with the lenticules lying parallel to the direction of the graticule in the camera, then the image can be reconstituted and, indeed, depending upon the angle of viewing, two completely separately images can be seen.

This system whilst satisfactory is still rather limited in its application and the camera which produces the images is very complex, rare and expensive.

It is the object of the present invention to provide a secure encoding method, and products bearing the encoding which is more flexible than the previously known systems but which, at the same time, provides an extremely efficient method of encoding and reconstitution.

The invention includes means for producing visual information, characterised by a base surface having an area coloured in two distinct colours, the first of said colours being the background colour and the second of said colours being applied in a random pattern of macro-pixels of definite uniform shape, and a mask which is transparent over at least an area identical to the first mentioned area and is arranged so the transparent portion has pixels which are identical in size with the first-mentioned pixels in a pattern generally identical with the pattern on the base surface except in that portion where the information is desired to appear, in which portion the pixels are displaced with respect to those on the base surface, so that, in that portion the pixels produce the desired visual information when the pattern on the mask is placed directly over the pattern on the base surface and on the remainder of the area the random pattern is maintained.

The mask and the base are provided with register means whereby registration can be precisely achieved.

Each macro-pixel can be formed of a number of macro-pixels.

The invention also can include products have printed thereon a base surface of the type set out hereinbefore which, when overlaid with a transparent mask can provide information.

The method and products of the invention can take many different forms which will be readily seen from the description of various applications of the method.

One practical example of means according to the present invention will now be described with reference to the accompanying drawings.

Fig. 1 is a perspective showing a base sheet and mask acording to the present invention;

Fig. 2 is a plan view, on a larger scale, of the pattern printed upon the base sheet of Fig. 1;

Fig. 3 is plan view , on the same sacle as Fig. 2, of the pattern printed upon the mask of Fig. 1; and

Fig. 4 is a plan view of the mask and sheet of Figs. 2 and 3 when superposed in registration.

Referring now to the drawings, a sheet 5, which may be of any colour but which is preferably white, is provided with black pixels in a pattern 6 according to the present invention. In this specification, unless a prefix micro or macro is used in association with the word pixel, the word will be deemed to mean macro-pixel. Each macro-pixel can, if required, be made up of a number of micro-pixels. The information to be encoded is digitised and it is from this digitised information the requirements for both the micro-pixels and the macro-pixels is obtained.

Surrounding the pattern, four registration marks 7 are printed on the sheet. A transparent mask 8 is provided with a pattern 9 of identical size to the pattern 6, and with registration marks 10 at locations corresponding to the marks 7. The patterns may be of any area, but will usually be relatively small, for example, 3 cm wide and 1 cm high.

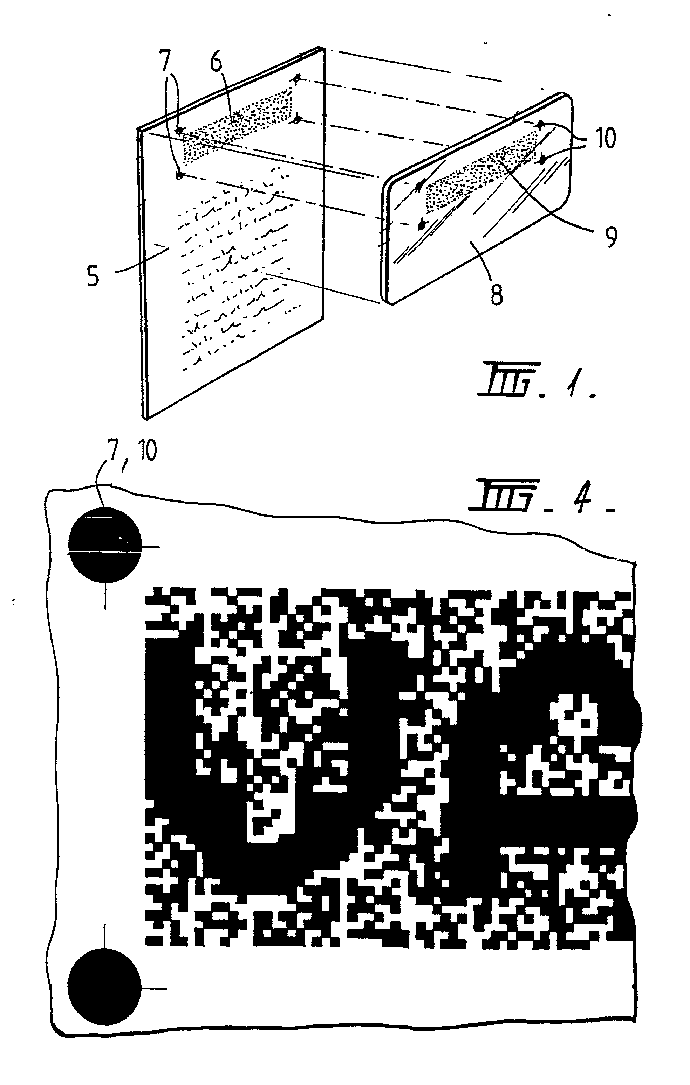

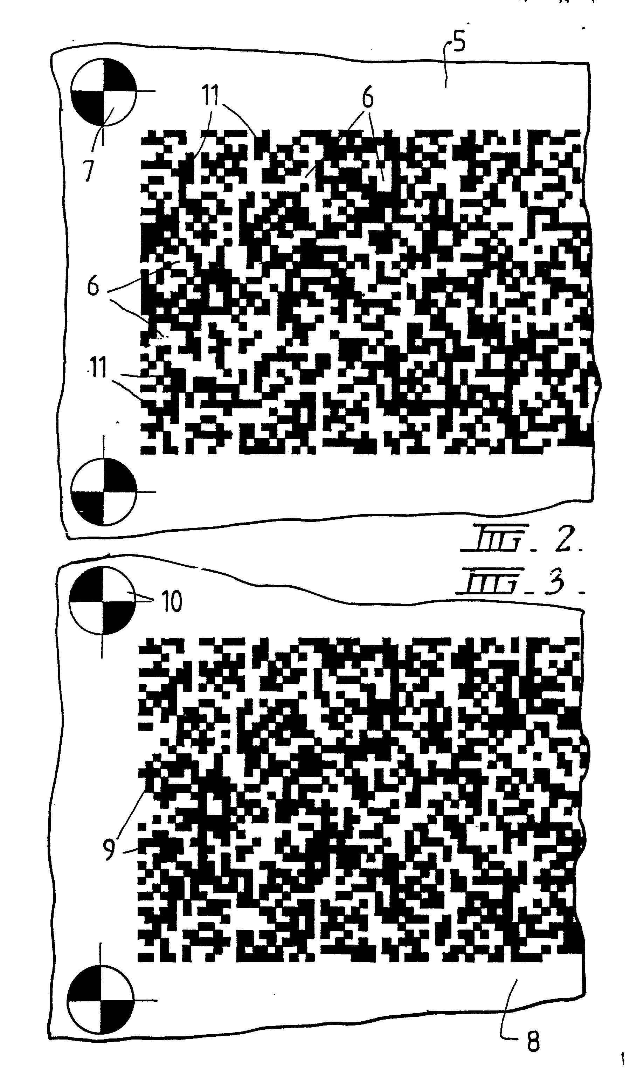

As shown in Fig. 2, the pattern 6 is composed of square black pixels 11 randomly distributed on the sheet 5, each square blocking in a square of a uniform grid. Approximately half of the square in the grid is thus blocked in.

As shown in Fig. 3, the pattern 9 on the transparent mask is based on an identical grid to that of the sheet 5, and over most of the area the black pixels are identically located to the black pixels in the pattern 6. However, in the part of the mask where the required code is to appear, the pattern is varied so that the black pixels are located on the squares of the grid which in the pattern 6 were white, while the squares covered by black pixels in the pattern 6 are, in the pattern 9, transparent. Consequently, the pattern 9 appears, on even a close examintion, to be the same as the pattern 6, but is in fact different over the area of the code.

If required, the two patterns can be slightly different even where the code is not be be provided, provided such differences are random and are not sufficient to form a spurious code.

The registration marks 7 are circles of identical size, each with two opposed quadrants black and the remaining two quadrants white. The registration marks 10 are circles of the same size as the marks 7 with the two quadrants that in the marks 7 were white blocked in black and the two quadrants transparent that in the marks 7 were black.

When the mask 8 is placed over the sheet 5, as shown in Fig. 5, with the registration marks coincident, the registration marks are seen as wholly black and the information is seen as continuous black letters "VA". The black colour of the code comes only from the pixels on the sheet or the mask, but not both. The black colour over the rest of the pattern results from the pixels of both the sheet and the mask reinforcing each other.

If the sheet 5 had a different pattern of pixels, the superposition of the mask 8 would almost invariably not result in any recognizable message. The chance of a couterfeiter being able to select at random a pattern 6 which would produce with the mask 8 and required validating is infinitesimal.

It will be seen that the first mask is formed from an effectively random pattern generator. This pattern can be formed on the mask as by a scanning process with each macro-pixel scanned in the embodiment being either black or white and being made of one or more micro-pixels.

The individual macro-pixel size or shape should be such that it does not distort any part of the visual information to be encoded, otherwise no limitations on pixel size exist. It will be appreciated that the greater the number of micro-pixels making up each macro-pixel, the better the quality of the encoded image.

It will be appreciated that there is no restriction to colour and the pixels, the background and the transparent mask can be of any colour.

It is preferred that the pixels be as small as possible, bearing in mind that they will normally be initially formed photographically, or on the selenium drum of a laser printer or the like and will have to be duplicated by some form of printing process.

As illustrated, the pixels are continuous in that there are no spaces between adjacent pixels. However, if required, it would be possible to separate the pixels. This would give silk screen appearance to the image but would not have any adverse affect on reading the coded information.

Where random generation is used it will be appreciated that at the completion of scanning the mask will have approximately equal numbers of black and white pixels.

The general appearance of the mask will thus normally be of a grey colour, that is mid-way between the colours of the two pixels black and white but will vary slightly and will have a washed look on which some parts may effectively be black, where the adjacent pixels are all black and other parts which may be white, where all the pixels are white.

To obtain the required information when the other of the masks, normally the base, non-transparent, mask is formed its pixels are reversed where the particular material to be displayed is located. That is those pixels which were white on the original mask become black and those which were black become white.

It is preferred that the identifying material is of a substantial size relative to the size of the pixels and thus each component of these masks overlies a large number of pixels.

As can be seen from considering the letters shown in Fig. 4 of the drawings, there can be a irregular edges in the letters being displayed, because of adjacent pixels being coloured, but this does not, in any way, adversely effect the readability of the letters, simply because of the relative sizes of the pixels and the letters concerned.

Also, it will be appreciated that, where a line of a letter cuts a pixel, a decision must be made whether to change the colour of the pixel or not, and thus there will be areas where this selection also provides a break in the appearance.

It will be appreciated that the mask so formed will still have effectively the same number of black and white pixels as did the original mask, assuming that the information covers a substantial number of pixels as, as mentioned earlier, effectively half the pixels will originally be black and half white so that on inversion they will still be in the same proportion.

It may be possible to provide the base or the mask, or possibly even both, with an excess of white pixels adjacent the edge of the informaiton so that there is a tendency for the information to stand out more from the background as adjacent the information the actual colour will tend not to be a situation where one or other of each pair of pixels is black but, rather that both the pixels of some of the pairs at least will be white.

It could be that, by changing some of the pixels in the base and some in the mask, this effect could be maximised, whilst the overall variation in either the base or the mask would not be readily noticed.

Thus on examining the base mask it will still be effectively a completely random orientation of pixels and no indication of the information carried will be apparent to the eye.

It will be appreciated that if, as in Fig. 1, the base or non-transparent mask is printed on an article such as, for example, a lottery ticket and it is desired to ensure that the ticket is genuine it is only necessary to overlie an appropriate transparent mask, in register, and if so genuine information will be shown.

If the ticket is not genuine or it has been tampered with in any way it would be most unlikely that the information could be displayed in such a way as to be able to be seen.

Whilst the foregoing embodiment clearly describes the general concept of the invention it is to be understood that there are many modifications which can be made in the invention to aid in the increase of security.

Firstly it would be possible to use inks of different colours in the base and the transparent masks so that where information is not carried, and the pixels directly overlie then a specific colour surrounds the information whilst the information itself consists of pixels of two different colours adjacent but not combined.

Also it would be possible to vary the colours of the pixels in such a way, say, no particular combined colour should be seen and if any such colour is seen there is an indication that the base mask is not correct.

In these circumstances, the tolerence of the printing by the original manufacturer must be very fine as where different colours are used then the registration of adjacent pixels on the same mask must be very closely controlled.

It would also be possible to use, on the base mask an ink which cannot be seen under normal light so that there is simply a latent image but which can be caused to either be developed, such as by heating or examination under a particular light such as an ultra violet light.

In the second case the light could pass through the base mask from behind or be reflected from the base mask and the image be readily be seen.

Also the pixels could if required be of different shapes. Normally they would be in the form of squares of dots but they could be extended or reduced in size so that the pattern generated is made of components of various sizes which would increase the difficulty in producing something which would register with the transparent mask.

Whilst in the foregoing we have described the invention on a two dimensional basis it is possible to apply it in a single dimension, the information being dots or dashes or in three dimensions, using either planes of polarization, colour or any other way of separating the dimensions.

It is also possible to use normal techniques, such as inks of special colours or fugitive inks to assist in countering counterfeiting.

Also the inks used could be such as to permit scanning.

For example magnetic ink could be used and when the two masks are in alignment then a particular image could be formed which could be detected by a scanner and checked either with a computer memory or be displayed.

It would also be possible to print a background to a ticket in the form of a random pattern of pixels which bear the information required, with this printing being of a different colour to the rest of the printing on the article.

In this arrangement, providing the visible printing does not occupy too large an area, the existence of the coded material can be ascertained by locating a transparent mask over the whole, or a part of the ticket, and the coded information will be ascertainable, notwithstanding the fact that, in some areas, it may be over-printed by the visible information on the ticket.

It may also be desirable to print an undercoat on to the ticket, with the undercoat including fluorescent material so that, should any person attempt to photocopy the ticket, the image will be inverted or blurred because of the reaction of the fluorescent material to the ultraviolet light in the photocopier lamp.

Quite apart from the types of inks and printing techniques used there can be other aspects of the invention.

For example we have previously referred to the necessity for extremely close registration between the two masks and whilst this could be obtained from registration marks which, for example, constitute the edges of the border of the masks it would be also possible to use registration marks which were some other points on the article carrying the base mask. For example the transparent mask could be provided with a number of letters which appear on the printing which could be spaced from the mask on the article and this would make unauthorised registration extremely difficult.

Using such techniques the sizes of the two masks could be different and this would make it very difficult for any person who was not aware to attempt to bring the two masks into register.

Also it may well be possible to locate the transparent mask on, say, a relatively thick sheet of glass and in order to obtain the correct registration the base mask would effectively be displaced as it would be necessary to account for refraction looking through the glass.

Whilst earlier herein we have discussed the possibility of providing different types of information it would also be perfectly feasible, using, say, a laser printer to alter the information on each article printed. For example if lottery tickets were to be produced then each ticket could have a separate number, say up to 500,000 or 1,000,000 at which stage the run of ticket numbers could start again. Also these numbers could be completely randomly placed on the tickets so that no selling agency would have a group of consecutively numbered tickets.

The method of the invention also has a further advantage over previously known methods and that is that it is basically simple to change the masks.

Whereas in the previous form described in the introduction hereto it would be possible to change graticules the change would be restricted by varying the width of the lenses of the graticule but by the use of the arrangement of the present invention completely new random patterns could be generated whenever required and this pattern could be applied on transparent masks as well as on the tickets themselves.

It is often the case with lotteries that over relatively short periods, say monthly or three monthly, the tickets are changed and the mask could be changed with each change of tickets so that even if a person managed to develop a mask which would operate with one particular form of ticket this mask would be valueless with any other form of ticket. Also where tickets were being supplied to a number of different users it would be possible to supply unique masks to each of these users thus increasing overall security.

Whilst earlier herein we referred to the pixels of the mask as being located by a random number generator from which the random pattern is made it will be appreciated that such generators may not be truly random and in fact could even be ordered provided there is an overall appearance of randomness in the mask so that there are no obvious distortions from this.

Further, it may be possible to form the mask on the article in the form of a watermark or depressions in the surface of the material of the article. In such an arrangement the effective size of the pixels would be greater than for the other embodiments described.

Whilst in this specification we have described the mask of the invention as being applied directly to an article, it could equally well be applied to, say, labels which are adhered to articles.

## Claims

1. Means for producing visual information, characterised by a base surface having an area coloured in two distinct colours, the first of said colours being the background colour and the second of said colours being applied in a random pattern of macro-pixels of definite uniform shape, and a mask which is transparent over at least an area identical to the first mentioned area and has is arranged so the transparent portion has pixels which are identical in size with said first-mentioned pixels in a pattern generally identical with the pattern on the base surface except in that portion where the information is desired to appear, in which portion the pixels are displaced with respect to those on the base surface, so that in that portion the pixels produce the desired visual information when the pattern on the mask is placed directly over the pattern on the base surface and on the remainder of the area the random pattern is maintained.

2. Means according to claim 1 wherein the pixels on the transparent portion are of the second of said colours.

3. Means according to claim 1 or claim 2 wherein the pixels in each colour each cover approximately half the area of the pattern.

4. Means according to any one of claims 1 to 3 wherein the pixels are square in shape.

5. Means according to any preceding claim wherein the adjacent pixels are spaced from each other.

6. Means according to any preceding claim wherein certain of the pixels on the base or the mask adjacent the desired visual information which would normally be of the second colour are of the background colour.

7. Menas according to any preceding claim wherein the macro-pixels are each formed from a number of micro-pixels.

8. Means according to any preceding claim wherein the mask and the sheet have marks thereon to assist an operator to place the patterns in register.

9. Means according to any preceding claim wherein the base surface has printed thereon other information which may, in part, overlie some of the portion where information is to appear.

10. Means according to any preceding claim wherein the second of said colours on the base area is developed from a latent image when the information is to be examined.

11. Means according to any preceding claim wherein the base surface has an undercoat of fluorescent material.

12. an article provided with means according to any preceding claim wherein the base surface is part of the surface of the article.

FIG. 1.

FIG. 4.

FIG. 2.

FIG. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-3 279 095 (C. CARLSON) <br> * Column 1, lines 68-72; column 2, lines 1-42; column 4; column 8, lines 40-75; column 9, lines 1-29; figures 7-12 * | 1-3,8, 12 | G 09 C 5/00 |
| A | | 7,9 | |
| A | US-A-2 952 080 (E. AVAKIAN) <br> * Columns 3-6; figures 7-9 * | 1-5,12 | |
| A | FR-A-2 287 737 (INDUSTRIAL PAPELERA S.A.) <br> * Page 1, lines 37-40; page 2, lines 1-6 * | 1,10,12 | |

TECHNICAL FIELDS SEARCHED (Int. Cl.4)

G 09 C
G 09 F

The present search report has been drawn up for all claims

| Place of search | Date of completion of the search | Examiner |
|---|---|---|
| THE HAGUE | 24-11-1987 | ODGERS M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document